# FASCICULE DE BREVET EUROPEEN

(11) **EP 1 614 625 B1**
(45) Date de publication et mention de la délivrance du brevet: **24.09.2008**
(21) Numéro de dépôt: 05106150.5
(22) Date de dépôt: 06.07.2005
(51) Int. Cl.: B64C 1/18

(54) **Plancher pour aéronef**
Flugzeugdeck
Aircraft floor

(30) Priorité: 08.07.2004 FR 0407627
(43) Date de publication de la demande: 11.01.2006
(73) Titulaire: AIRBUS France, 31060 Toulouse (FR)
(72) Inventeur: Vetillard, Alban, 31130 Fonsegrives (FR); Parro, Emmanuel, 31300 Toulouse (FR); Leclerc, Frédéric, 31320 Pechbusque (FR)
(74) Mandataire: Poulin, Gérard

(56) Documents cités:
- US-A- 4 479 621
- US-A- 5 222 694

## Description

### DOMAINE TECHNIQUE

La présente invention se rapporte de façon générale à un plancher pour aéronef, et plus particulièrement à un plancher de cockpit incorporant notamment une pluralité de longerons assemblés à une pluralité de traverses.

### ÉTAT DE LA TECHNIQUE ANTÉRIEURE

De façon connue, le plancher de cockpit d'un aéronef présente une forme adaptée au rétrécissement du fuselage rencontré dans cette partie de l'aéronef, en ce sens que sa largeur diminue en allant vers l'avant.

De plus, ce type de plancher peut s'étendre vers l'arrière jusque dans une portion cabine de l'aéronef, et constitue plus généralement le plancher de toute la partie nez de l'aéronef.

De tels planchers sont alors conçus pour répondre à plusieurs besoins spécifiques, tels que par exemple la nécessité de présenter des ouvertures pour l'intégration des palonniers de commande et de la console centrale du cockpit, permettre la marche des occupants de l'aéronef, autoriser l'installation d'équipements divers tels que des meubles électriques ou des sièges, assurer la reprise des efforts mécaniques rencontrés en cas de crash de l'aéronef, ou encore isoler électromagnétiquement la portion inférieure de la partie supérieure de cet aéronef.

De l'art antérieur, on connaît des planchers de cockpit intégrant des longerons et traverses métalliques, par exemple réalisés en aluminium ou dans l'un de ses alliages, de façon à offrir une bonne rigidité mécanique. En outre, la rigidité globale d'un tel plancher est renforcée par la présence de caissons obtenus par l'adjonction de tôles métalliques supérieure et/ou inférieure sur une partie de l'ensemble constitué par les longerons et les traverses.

A ce titre, il est noté que les caissons situés aux extrémités latérales du plancher servent également de moyens de fixation de ce plancher sur les cadres et peaux de fuselage du cockpit. D'autre part, les parties de l'ensemble non caissonnées sont recouvertes par un revêtement supérieur du type sandwich nid-d'abeilles, permettant notamment aux occupants de l'aéronef de pouvoir marcher sur le plancher.

En outre, le plancher dispose également de moyens de fixation permettant son assemblage sur un fond étanche situé à l'avant du cockpit et donc à l'avant du fuselage de l'aéronef, ces moyens de fixation assurant des liaisons mécaniques du type encastrement ou caisson entre le plancher et le fond étanche.

Or la présence de ces liaisons d'encastrement génère des inconvénients non négligeables, qui vont être expliqués ci-après.

Effectivement, il est noté que durant les différentes phases de vol de l'aéronef, le fond étanche est amené à se déformer pour diverses raisons, par exemple sous l'effet de contraintes thermiques importantes, et surtout lors des phases de pressurisation de l'aéronef. De plus, le fond étanche est contraint mécaniquement par cet encastrement, ce qui engendre des phénomènes de fatigue au niveau des liaisons d'encastrement.

Ainsi, du fait de l'encastrement opéré au niveau du fond étanche, ces déformations sont transmises au plancher qui, naturellement, subit à son tour des déformations et des contraintes qui leur sont associées. Il est noté que ce phénomène de transmission de déformations au plancher, qui est quant à lui soumis à la température intérieure de l'aéronef, peut notamment avoir pour conséquence néfaste de conduire le pilote à ressentir ce plancher, et/ou les équipements mécaniquement liés à ce dernier, bouger sous ses pieds.

D'autre part, un autre inconvénient concerne la jonction entre le fond étanche et le plancher. L'accès à cette zone est malaisée et nécessite la mise en oeuvre d'un grand nombre de pièces.

Naturellement, ces inconvénients se retrouvent également sur le plancher de l'aéronef qui est raccordé au niveau d'une portion arrière à un fond étanche situé à l'arrière du fuselage de ce même aéronef.

### EXPOSÉ DE L'INVENTION

L'invention a donc pour but de proposer un plancher pour aéronef, ce plancher remédiant au moins partiellement aux inconvénients mentionnés ci-dessus relatifs aux réalisations de l'art antérieur.

Pour ce faire, l'invention a pour objet un plancher pour aéronef, de préférence un plancher de cockpit, ce plancher comportant une pluralité de longerons s'étendant selon une direction longitudinale de l'aéronef ainsi qu'une pluralité de traverses assemblées aux longerons et s'étendant selon une direction transversale de l'aéronef, le plancher comportant également des moyens de fixation permettant son assemblage sur un fond étanche de l'aéronef, ce fond étanche étant situé à l'avant du cockpit lorsque l'invention s'applique à un plancher de cockpit. Selon cette invention, les moyens de fixation comprennent une pluralité d'attaches comportant chacune au moins un organe de jonction disposant de deux extrémités opposées, chacune des deux extrémités opposées étant articulée selon un axe orienté parallèlement à la direction transversale.

Ainsi, il est à comprendre que ce type d'attache employé permet au fond étanche de se déformer librement, par exemple sous l'effet de contraintes thermiques ou lors des phases de pressurisation de l'aéronef, sans que les déformations rencontrées ne soient transmises au plancher.

En d'autres termes, le fait de prévoir que le ou les organes de jonction soient articulés à leurs deux extrémités selon des axes transversaux implique que les attaches des moyens de fixation peuvent chacune être facilement conçues de manière à ne reprendre que des efforts s'exerçant selon une direction verticale de l'aéronef. A cet égard, il est à noter qu'en cas de crash de l'aéronef, ces attaches ne participent pas à la reprise des efforts transmis au plancher et s'exerçant selon la direction longitudinale, cette fonction étant alors assurée par d'autres moyens non détaillés dans cette demande.

Avantageusement, dans la présente invention, le nombre réduit de pièces ainsi que le principe de jonction tolérant aux défauts de fabrication et d'assemblage, facilitent conjointement l'intégration de cette jonction.

De préférence, chaque attache des moyens de fixation comporte un premier élément de raccordement solidaire d'une structure primaire du plancher constituée par l'assemblage des longerons et des traverses, ainsi qu'un second élément de raccordement destiné à être fixé solidairement sur le fond étanche. Dans un tel cas, il est alors prévu que chaque organe de jonction est articulé à l'une de ses deux extrémités opposées sur le premier élément de raccordement, et à l'autre de ses deux extrémités opposées sur le second élément de raccordement.

Naturellement, le premier élément de raccordement solidaire de la structure primaire pourrait être directement monté sur cette dernière, ou bien être rapporté indirectement par exemple en étant monté fixement sur un longeron secondaire, lui-même monté fixement à l'avant de cette structure primaire du plancher.

Préférentiellement, chaque attache des moyens de fixation comporte deux organes de jonction.

Par ailleurs, chaque organe de jonction peut être une manille, une biellette, ou toute autre pièce similaire.

De manière préférée, chaque manille est orientée principalement selon une direction verticale de l'aéronef, de sorte que la fonction évoquée ci-dessus, de reprise unique des efforts s'exerçant selon la direction verticale, peut facilement être assurée.

Dans le cas où l'invention s'applique à un plancher de cockpit, ce dernier peut alors comporter une pluralité de longerons secondaires s'étendant selon la direction longitudinale et étant montés solidairement sur l'avant de la structure primaire. Avec une telle configuration, on peut prévoir qu'une attache des moyens de fixation est montée fixement sur l'avant de chacun de ces longerons secondaires.

Les longerons et les traverses, formant conjointement la structure primaire de plancher, sont de préférence tous réalisés en matériau composite. Cela permet avantageusement d'obtenir une réduction significative de la masse globale de ce plancher. A titre indicatif, la réduction de masse observée peut aller au-delà de 20% par rapport aux solutions classiques de l'art antérieur utilisant des matériaux métalliques.

Par ailleurs, les traverses et les longerons en matériau composite ne sont avantageusement plus soumis aux risques de corrosion rencontrés antérieurement.

Enfin, il est noté que le type de matériau utilisé dans le plancher selon l'invention est compatible avec l'ensemble des besoins spécifiques mentionnés ci-dessus, notamment en ce qui concerne la reprise des efforts mécaniques en cas de crash de l'aéronef.

De préférence, les longerons et les traverses sont réalisés dans un matériau composite à base de fibres de carbone imprégnées de résine. Cette résine est de préférence une résine thermoplastique, telle que de la résine PEEK, PEKK, PPS, etc.

Bien que la résine PEEK soit préférée en raison des hautes performances mécaniques qu'elle est capable de procurer, d'autres types de résine thermoplastique pourraient être utilisés, tels que de la résine dite PPS mentionnée ci-dessus et obtenue par polymérisation du sulfure de phénylène. En outre, il pourrait également être utilisé des résines thermodurcissables.

Enfin, l'invention a également pour objet un ensemble pour aéronef comprenant un fond étanche ainsi qu'un plancher tel que celui décrit ci-dessus. Dans un tel cas, le fond étanche est soit un fond étanche situé à l'avant du fuselage de l'aéronef, soit un fond étanche situé à l'arrière du fuselage de l'aéronef. Néanmoins, il est à comprendre que l'ensemble selon l'invention couvre également un plancher équipé à la fois du fond étanche avant et d'un fond étanche arrière, chacun raccordé au plancher de la manière exposée ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partiellement éclatée en perspective d'une partie nez d'un aéronef, ce dernier comprenant un plancher de cockpit selon un mode de réalisation préféré de la présente invention ;
- la figure 2 représente une vue en perspective de la structure primaire du plancher de cockpit représenté sur la figure 1 ;
- la figure 3 représente une vue partielle et agrandie en perspective de la figure 2, montrant plus particulièrement l'assemblage entre les sections de longeron et les traverses ;
- la figure 4 représente une vue partielle en perspective du plancher de cockpit montré sur la figure 1, ledit plancher étant représenté sans sa peau ;
- la figure 5 représente une vue partielle en perspective du plancher de cockpit montré sur la figure 1, correspondant au plancher représenté sur la figure 4 auquel il a notamment été assemblé une peau supérieure ainsi que des moyens de fixation permettant son assemblage sur le fond étanche du cockpit ;
- la figure 6 représente une vue en perspective montrant partiellement le plancher représenté sur la figure 5, assemblé sur le fond étanche du cockpit ; et
- la figure 7 représente une vue de côté montrant plus spécifiquement l'une des attaches des moyens de fixation représentés sur la figure 5.

### EXPOSÉ DÉTAILLÉ D'UN MODE DE RÉALISATION PRÉFÉRÉ

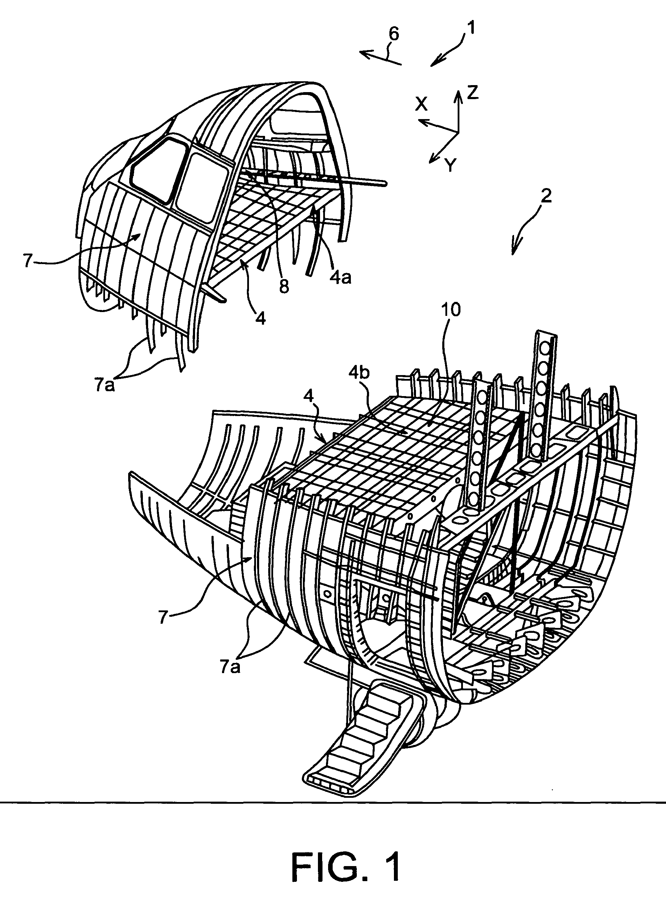

En référence à la figure 1, il est partiellement représenté l'avant d'un aéronef 1, et plus précisément la partie nez 2 de cet aéronef, comprenant un plancher de cockpit 4 selon un mode de réalisation préféré de la présente invention.

Dans toute la description qui va suivre, par convention, on appelle X la direction longitudinale de l'aéronef 1, Y la direction orientée transversalement par rapport à l'aéronef, et Z la direction verticale, ces trois directions étant orthogonales entre-elles.

D'autre part, les termes « avant » et « arrière » sont à considérer par rapport à une direction d'avancement de l'aéronef rencontrée suite à la poussée exercée par les moteurs de l'aéronef, cette direction étant représentée schématiquement par la flèche 6.

Comme on peut le voir sur la figure 1, le plancher de cockpit 4 s'étend dans un plan XY sur sensiblement toute la longueur de la partie nez 2 de l'aéronef, et est monté sur un fuselage 7 de celui-ci. Le plancher de cockpit 4 est monté sur des cadres de fuselage 7a du fuselage 7, ces cadres 7a étant espacés les uns des autres dans la direction X de l'aéronef, et répartis de part et d'autre du plancher 4 par rapport à la direction Y.

De plus, le plancher 4 dispose d'une forme se rétrécissant dans la direction Y en allant vers l'avant, en raison du rétrécissement du fuselage 7 dans cette même direction.

D'autre part, la partie nez 2 peut comprendre un espace avant de poste de commande 8 ainsi qu'un espace arrière de cabine 10, ces deux espaces 8, 10 étant habituellement séparés par une cloison (non représentée). De façon plus générale, la partie nez d'un aéronef et le plancher cockpit s'étendent sur environ 10 % de la longueur totale de cet aéronef selon la direction X, c'est-à-dire sur quelques mètres, et par exemple sur trois à cinq mètres. A titre d'exemple illustratif, lorsque l'aéronef est essentiellement destiné à transporter du fret et/ou des équipements militaires, sa partie nez est délimitée vers l'arrière par une zone destinée au stockage des éléments qui viennent d'être mentionnés.

Comme cela est représenté, le plancher de cockpit 4 peut éventuellement être conçu en deux parties distinctes destinées à être assemblées mécaniquement, la séparation entre une partie avant 4a et une partie arrière 4b de plancher se situant par exemple au niveau de la cloison séparant l'espace avant de poste de commande 8 et l'espace arrière de cabine 10. Néanmoins, pour faciliter la compréhension de l'invention, il sera considéré dans la suite de la description que le plancher de cockpit 4 forme un élément unique s'étendant sensiblement d'un bout à l'autre de la partie nez 2 de l'aéronef.

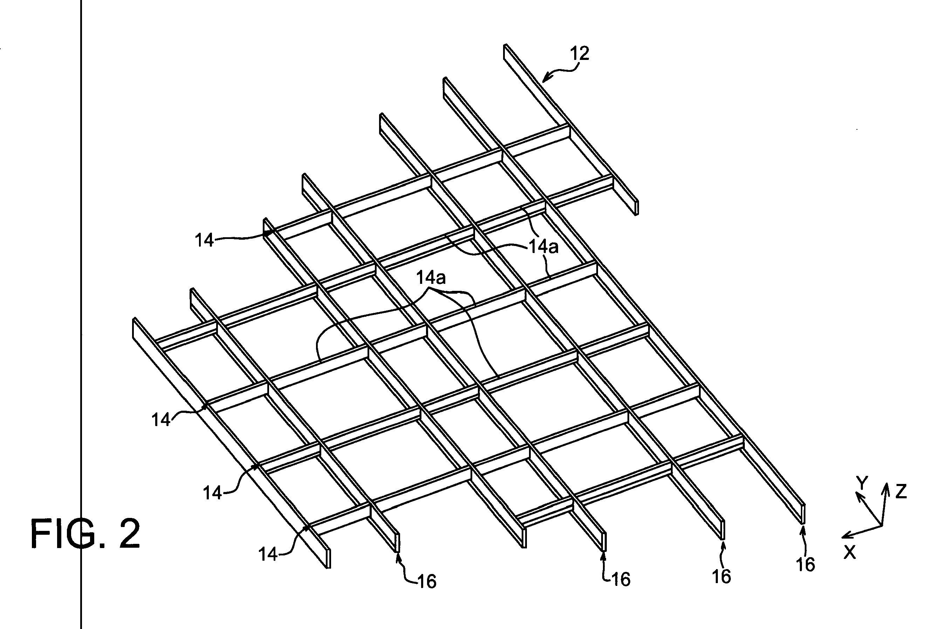

En référence à présent à la figure 2, on voit une structure primaire ou principale 12 du plancher 4 montré sur la figure 1, cette structure primaire 12 étant formée par un assemblage entre une pluralité de longerons 14 s'étendant selon la direction X, et une pluralité de traverses 16 s'étendant selon la direction Y de l'aéronef. Il est précisé que cette structure primaire 12 assure une partie importante de la rigidité globale du plancher de cockpit 4.

Les longerons 14, par exemple prévus au nombre de six, sont chacun réalisés dans un matériau composite, de préférence dans un matériau composite thermoplastique obtenu à l'aide de plis de fibres de carbone imprégnés de résine PEEK, PEKK ou PPS.

Chaque longeron 14 présente alors préférentiellement une section transversale en forme de C similaire à une forme de U incliné à 90°, qui est particulièrement facile à obtenir à l'aide d'une presse d'estampage, cette dernière permettant également de disposer facilement d'un C dont les branches supérieure et inférieure ainsi que la base du C présentent sensiblement la même épaisseur, par exemple comprise entre 2 et 5 mm.

De manière analogue, les traverses 16, par exemple prévues au nombre de sept, sont également chacune réalisées dans un matériau composite, de préférence dans un matériau composite thermoplastique obtenu à l'aide de plis de fibres de carbone imprégnés de résine PEEK, PEKK ou PPS.

Chaque traverse 16 présente alors aussi préférentiellement une section transversale en forme de C similaire à une forme de U incliné à 90°, et dont les branches supérieure et inférieure ainsi que la base du C présentent sensiblement la même épaisseur, par exemple comprise entre 2 et 5 mm.

De préférence, chaque traverse 16 est réalisée d'une seule pièce et s'étend dans la direction Y sur toute la largeur de la structure primaire 12. En revanche, chaque longeron 14 est en fait composé de plusieurs sections de longeron 14a et s'étend dans la direction X sur toute la longueur de la structure primaire 12.

Plus précisément, chaque section de longeron 14a d'un longeron 14 donné est positionnée entre deux traverses 16 directement consécutives dans la direction X, et dispose de deux extrémités assemblées rigidement respectivement à ces deux mêmes traverses 16 directement consécutives.

A cet égard, il est noté que l'avantage d'une telle configuration réside dans le fait que les branches ou semelles supérieures des sections de longeron 14a et des traverses 16 sont agencées dans un même plan XY, ces branches supérieures de C permettant par conséquent de former conjointement une surface supérieure plane de la structure primaire 12.

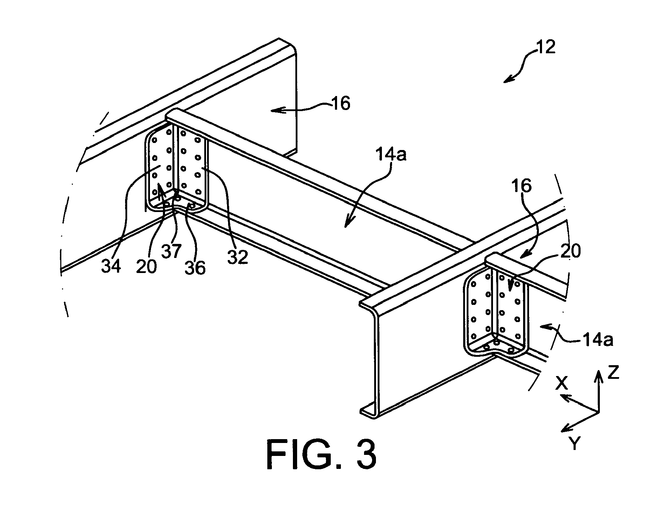

La figure 3 montre à titre indicatif que les sections de longeron 14a sont assemblées aux traverses 16 par l'intermédiaire d'éléments de jonction 20, qui sont également chacun réalisés dans un matériau composite, de préférence dans un matériau composite thermoplastique obtenu à l'aide de plis de fibres de carbone imprégnés de résine PEEK, PEKK ou PPS.

Globalement, chaque élément de jonction 20 est constitué de trois faces planes qui forment ensemble un coin de malle. En d'autres termes, un élément 20 comprend une première face plane 32 qui est orientée selon un plan XZ, une seconde face plane 34 qui est orientée selon un plan YZ, ainsi qu'une troisième face plane 36 qui est orientée selon un plan XY, chacune de ces trois faces disposant de deux arêtes de jonction (non référencées) assurant respectivement la jonction avec les deux autres faces. De plus, les trois faces 32, 34, 36 disposent de préférence d'une même épaisseur, et se rejoignent toutes en une zone sensiblement arrondie 37.

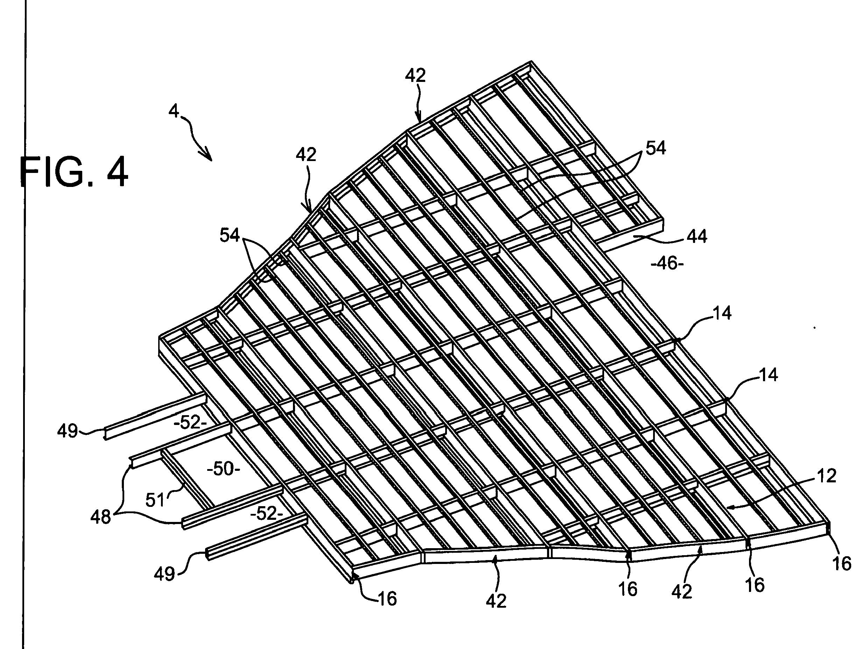

En référence à présent à la figure 4, on voit une partie du plancher de cockpit 4, ce plancher 4 comprenant la structure primaire 12 sur laquelle ont été assemblés des longerons périphériques 42, ces derniers étant identiques ou similaires aux sections de longeron 14a de la structure primaire 12. Comme on peut clairement l'apercevoir sur la figure 4, les longerons périphériques 42 permettent de relier entre elles et deux à deux les extrémités des traverses 16 de la structure primaire 12.

A titre d'exemple illustratif, il est noté que le plancher 4 est également équipé d'un petit longeron 44 situé à l'arrière de la structure primaire 12, et définissant avec une traverse arrière 16 un décrochement 46 dans la structure 12, ce décrochement 46 étant adapté pour loger un escalier (non représenté) dont une marche supérieure serait située à proximité du petit longeron 44.

D'autre part, des longerons secondaires avant 48, 49 de préférence prévus au nombre de quatre et réalisés dans un matériau composite thermoplastique obtenu à l'aide de résine PEEK, PEKK ou PPS et de plis de fibres de carbone, sont solidarisés à la traverse 16 la plus avant de la structure primaire 12, de préférence à l'aide d'éléments de jonction 20 tels que ceux décrits ci-dessus.

Les deux longerons secondaires 48 situés les plus au centre délimitent conjointement un espace 50 pour recevoir une console centrale du cockpit (non représentée), et peuvent être chacun situés dans le prolongement d'un longeron 14 de la structure 12. De plus, ils peuvent être reliés l'un à l'autre à l'avant par l'intermédiaire d'une petite traverse 51 pouvant également supporter la console centrale.

D'autre part, les deux longerons secondaires 49 situés latéralement délimitent chacun avec l'un des deux longerons secondaires 48 un espace 52 pour recevoir des palonniers de commande (non représentés), de sorte que les deux espaces 52 obtenus se situent de part et d'autre de l'espace 50 dans la direction transversale Y de l'aéronef. De plus, chacun des deux longerons secondaires 49 se situe entre deux longerons 14 de la structure primaire 12, comme cela est visible sur la figure 4.

Le plancher de cockpit 4 présente en outre des éléments raidisseurs 54, qui s'étendent de préférence selon la direction Y, entre les traverses 16 de la structure primaire 12. A titre indicatif, les éléments raidisseurs 54 sont réalisés dans un matériau composite, de préférence dans un matériau composite thermoplastique obtenu à l'aide de résine PEEK, PEKK ou PPS et de plis de fibres de carbone, et sont par exemple prévus dans un nombre compris entre deux et cinq, entre deux traverses 16 directement consécutives dans la direction X.

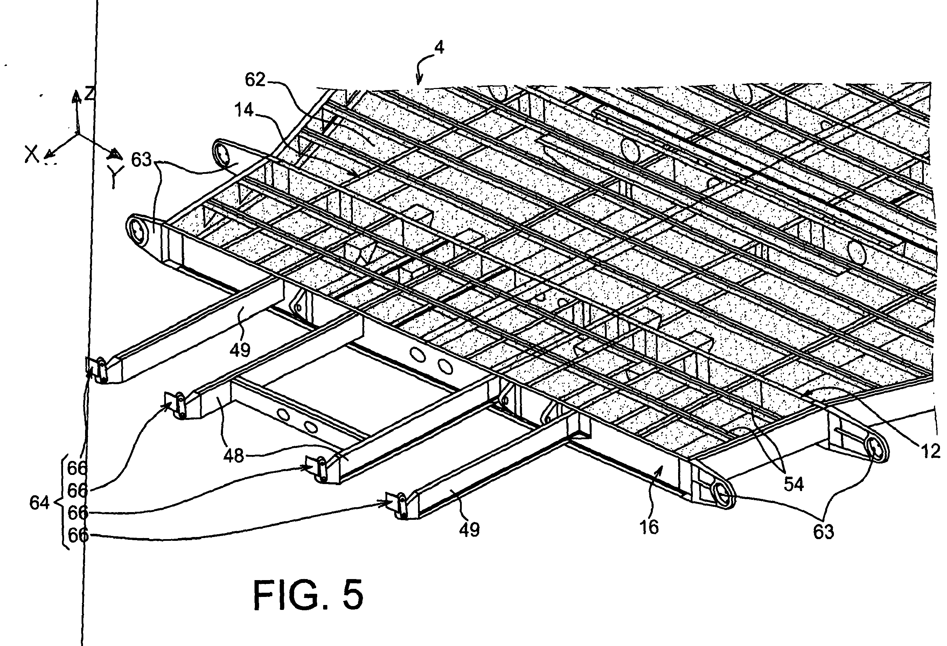

Les parties supérieures des éléments raidisseurs 54 définissent conjointement une surface supérieure qui est confondue avec la surface supérieure de la structure primaire 12, sur laquelle va reposer une peau 62 telle que celle représentée sur la figure 5.

Cette peau 62 est assemblée rigidement sur les longerons 14, les traverses 16, ainsi que sur les éléments raidisseurs 54. A cet égard, il est précisé que ces éléments 54 sont de préférence assemblés sur une surface inférieure de la peau 62, par exemple par rivetage, avant que la surface inférieure de cette peau 62 ne soit assemblée sur les branches supérieures des longerons 14 et des traverses 16.

Ici encore, la peau 62 est préférentiellement réalisée dans un matériau composite selon une épaisseur sensiblement constante, et de préférence dans un matériau composite thermoplastique obtenu à l'aide de résine PEEK, PEKK ou PPS et de plis de fibres de carbone.

Sur la figure 5, la structure primaire 12 n'étant pas recouverte par une peau inférieure, il est donc à considérer que la peau supérieure 62 forme uniquement des demi-caissons avec les longerons 14 et les traverses 16.

Toujours en référence à cette figure 5, on peut voir que le plancher 4 est équipé de moyens de fixation 63 permettant son assemblage sur les cadres de fuselage 7a indiqués précédemment. Ces moyens 63 ne faisant pas partie de l'objet de la présente invention, ils ne seront par conséquent pas davantage décrits.

D'autre part, le plancher 4 est aussi équipé de moyens de fixation 64 permettant son assemblage sur un fond étanche ou fond étanche de fuselage (non représenté sur la figure 5) du cockpit, ce fond étanche étant globalement situé en regard et à l'avant du plancher 4.

Les moyens de fixation 64 comprennent une pluralité d'attaches 66 conçues de manière à reprendre principalement les efforts s'exerçant selon la direction Z, et qui, dans le mode de réalisation préféré présenté, sont chacune associées à un longeron secondaire 48, 49 donné. Ces attaches 66 sont donc prévues au nombre de quatre, et permettent notamment un libre mouvement du fond étanche par rapport au plancher 4, dans la direction X.

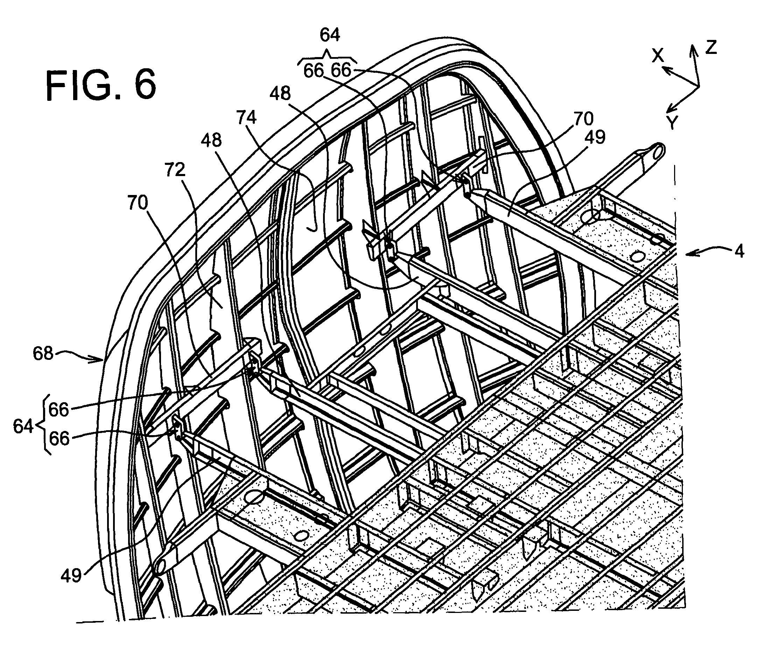

Chacun des quatre longerons secondaires 48, 49 est donc équipé, au niveau de son extrémité libre avant, d'une attache 66 montée fixement sur cette même extrémité, et également destinée à être montée fixement sur le fond étanche 68 représenté sur la figure 6. A titre indicatif, il est rappelé que l'extrémité arrière des longerons secondaires 48, 49 est montée solidairement sur la structure rigide 12, et plus spécifiquement sur la traverse la plus avant 16.

On peut voir sur cette figure 6 que les attaches 66 sont toutes montées fixement sur des supports d'attache 70 appartenant au fond étanche 68 et prenant la forme de poutres orientées selon la direction Y, ces dernières étant solidarisées à des raidisseurs de fond étanche 72 fixés quant à eux sur une tôle de fond étanche 74, et qui s'étendent de façon espacée par rapport à la direction Y, dans des plans XZ parallèles.

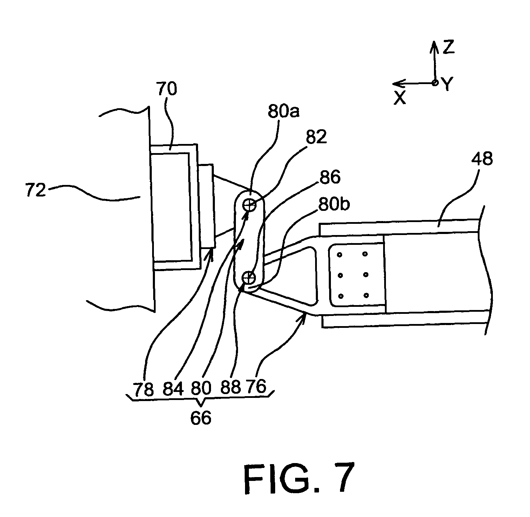

En référence plus spécifiquement à la figure 7 montrant l'une quelconque des quatre attaches 66 des moyens de fixation 64 montrés sur les figures 5 et 6, on peut tout d'abord apercevoir qu'elle comporte un premier élément de raccordement 76 monté fixement sur l'extrémité avant du longeron secondaire 48. Cet élément de raccordement 76, sensiblement orienté selon un plan XZ et par exemple réalisé de façon métallique, dispose au niveau d'une partie avant d'un orifice traversant (non visible sur la figure 7) orienté selon la direction Y, cet orifice traversant faisant saillie vers l'avant par rapport à l'extrémité avant du longeron secondaire 48. A titre indicatif, cet orifice peut être bagué ou rotulé selon des exigences mécaniques, d'assemblage et de tolérance.

La fixation du premier élément de raccordement 76 sur le longeron secondaire 48 s'effectue par exemple par rivetage ou par soudage.

De manière analogue, l'attache 66 comporte un second élément de raccordement 78 monté fixement sur son support d'attache associé 70, appartenant au fond étanche 68. Cet élément de raccordement 78, par exemple métallique, dispose au niveau d'une partie arrière sensiblement orientée selon un plan XZ, d'un orifice traversant (non visible sur la figure 7) orienté selon la direction Y, cet orifice traversant faisant naturellement saillie vers l'arrière par rapport au support 70. Ici encore, cet orifice peut être bagué ou rotulé selon des exigences mécaniques, d'assemblage et de tolérance.

La fixation du second élément de raccordement 78 sur le support d'attache 70 s'effectue par exemple par rivetage ou par soudage d'une plaque appartenant au second élément de raccordement 78, et orientée dans un plan YZ.

Les deux éléments de raccordement 76, 78 susmentionnés sont reliés entre eux par deux organes de jonction 80 (un seul étant visible sur la figure 7), qui sont disposés verticalement et qui prennent la forme de manilles principalement orientées dans des plans XZ.

Chacune des deux manilles 80 est articulée au niveau de son extrémité supérieure 80a autour d'un axe 82 parallèle à la direction Y. Cette articulation est de préférence réalisée par l'intermédiaire d'un axe ou axe-double 84 traversant successivement, dans la direction Y, un orifice pratiqué sur l'extrémité supérieure 80a de l'une des deux manilles 80, l'orifice traversant pratiqué sur le second élément de raccordement 78, et enfin un orifice pratiqué sur l'extrémité supérieure 80a de l'autre des deux manilles 80.

De cette manière, les deux manilles 80, qui sont situées de part et d'autre du second élément de raccordement 78, sont chacune articulées au niveau de leur extrémité supérieure 80a sur ce même second élément de raccordement 78.

Pareillement, chacune des deux manilles 80 est articulée au niveau de son extrémité inférieure 80b autour d'un axe 86 parallèle à la direction Y. Cette articulation est de préférence réalisée par l'intermédiaire d'un axe ou axe-double 88 traversant successivement, dans la direction Y, un orifice pratiqué sur l'extrémité inférieure 80b de l'une des deux manilles 80, l'orifice traversant pratiqué sur le premier élément de raccordement 76, et enfin un orifice pratiqué sur l'extrémité inférieure 80b de l'autre des deux manilles 80.

Ici encore, il est donc à comprendre que les deux manilles 80, qui sont situées de part et d'autre du premier élément de raccordement 76, sont chacune articulées au niveau de leur extrémité inférieure 80b sur ce même premier élément de raccordement 76.

Il est précisé que si la description effectuée concerne une attache 66 comportant deux manilles 80 disposées de part et d'autre des éléments de raccordement 76, 78, il est également envisageable de prévoir que cette attache 66 n'intègre qu'une seule manille ou encore une manille-double (deux manilles superposées), sans sortir du cadre de l'invention.

Bien entendu, diverses modifications peuvent être apportées par l'homme du métier au plancher de cockpit 4 qui vient d'être décrit, uniquement à titre d'exemple non limitatif. En particulier, si la description détaillée ci-dessus est faite en référence à un plancher de cockpit et au fond étanche situé à l'avant du fuselage, il est naturellement à comprendre que l'invention s'applique également à un plancher de l'aéronef situé à l'arrière de ce dernier, et qui est raccordé à un fond étanche situé à l'arrière du fuselage de ce même aéronef.

## Revendications

1. Plancher (4) pour aéronef, ledit plancher comportant une pluralité de longerons (14) s'étendant selon une direction longitudinale (X) de l'aéronef ainsi qu'une pluralité de traverses (16) assemblées auxdits longerons (14) et s'étendant selon une direction transversale (Y) de l'aéronef, ledit plancher (4) comportant également des moyens de fixation (64) permettant son assemblage sur un fond étanche (68) de l'aéronef, **caractérisé en ce que** lesdits moyens de fixation (64) comprennent une pluralité d'attaches (66) comportant chacune au moins un organe de jonction (80) disposant de deux extrémités opposées (80a, 80b), chacune desdites deux extrémités opposées (80a, 80b) étant articulée selon un axe (82, 86) orienté parallèlement à ladite direction transversale (Y), de manière à ce que ladite attache (66) reprenne uniquement des efforts s'exerçant selon une direction verticale (Z) de l'aéronef.

2. Plancher (4) selon la revendication 1, **caractérisé en ce que** chaque attache (66) des moyens de fixation (64) comporte un premier élément de raccordement (76) solidaire d'une structure primaire (12) du plancher (4) constituée par l'assemblage des longerons (14) et des traverses (16), ainsi qu'un second élément de raccordement (78) destiné à être fixé solidairement sur ledit fond étanche (68), et **en ce que** chaque organe de jonction (80) est articulé à l'une de ses deux extrémités opposées (80b) sur le premier élément de raccordement (76), et à l'autre de ses deux extrémités opposées (80a) sur le second élément de raccordement (78).

3. Plancher (4) selon la revendication 1 ou la revendication 2, **caractérisé en ce que** chaque attache (66) des moyens de fixation (64) comporte deux organes de jonction (80).

4. Plancher (4) selon l'une quelconque des revendications précédentes, **caractérisé en ce que** chaque organe de jonction (80) est une manille.

5. Plancher (4) selon la revendication 4, **caractérisé en ce que** chaque manille (80) est orientée principalement selon une direction verticale (Z) de l'aéronef.

6. Plancher (4) selon l'une quelconque des revendications précédentes, **caractérisé en ce qu'**il s'agit d'un plancher de cockpit pour aéronef, ledit fond étanche (68) concerné étant situé à l'avant dudit cockpit.

7. Plancher (4) selon la revendication 6, **caractérisé en ce qu'**il comporte une pluralité de longerons secondaires (48, 49) s'étendant selon la direction (X) et montés solidairement sur l'avant d'une structure primaire (12) du plancher (4) constituée par l'assemblage des longerons (14) et des traverses (16), et **en ce qu'**une attache (66) des moyens de fixation (64) est montée fixement sur l'avant de chacun desdits longerons secondaires (48, 49).

8. Plancher (4) selon l'une quelconque des revendications précédentes, **caractérisé en ce que** lesdits longerons (14) et lesdites traverses (16) sont réalisées en matériau composite.

9. Plancher (4) selon la revendication 8, **caractérisé en ce que** lesdits longerons (14) et lesdites traverses (16) sont réalisés dans un matériau composite thermoplastique.

10. Plancher (4) selon la revendication 9, **caractérisé en ce que** le matériau composite thermoplastique est réalisé à l'aide de plis de fibres de carbone imprégnés de résine PEEK, PEKK ou PPS.

11. Ensemble pour aéronef comprenant un fond étanche ainsi qu'un plancher selon l'une quelconque des revendications précédentes.

12. Ensemble selon la revendication 11, **caractérisé en que** ledit fond étanche est un fond étanche situé à l'avant du fuselage de l'aéronef.

13. Ensemble selon la revendication 11, **caractérisé en que** ledit fond étanche est un fond étanche situé à l'arrière du fuselage de l'aéronef.

## Claims

1. Floor (4) for an aircraft, said floor comprising a plurality of spars (14) running along a longitudinal direction (X) of the aircraft and a plurality of cross-beams (16) assembled to said spars (14) and running along a transverse direction (Y) of the aircraft, said floor (4) also comprising attachment means (64) for assembly onto a sealed bottom (68) of the aircraft, **characterised in that** said attachment means (64) comprise a plurality of fasteners (66) each comprising at least one junction element (80) with two opposite ends (80a, 80b), each of said two opposite ends (80a, 80b) being articulated about an axis (82, 86) parallel to said transverse direction (Y), in order that said fastener (66) resists only forces applied along the vertical direction (Z) of the aircraft.

2. Floor (4) according to claim 1, **characterised in that** each fastener (66) in the attachment means (64) comprises a first connection element (76) fixed to a primary structure (12) of the floor (4) formed from an assembly of spars (14) and cross-beams (16), and a second connection element (78) designed to be fixed to said sealed bottom (68), and **in that** each junction element (80) is then articulated at one of its two opposite ends (80b) to the first connection element (76), and the other of its two opposite ends (80a) is articulated to the second connection element (78).

3. Floor (4) according to claim 1 or claim 2, **characterised in that** each fastener (66) in the attachment means (64) comprises two junction elements (80) .

4. Floor (4) according to any one of the previous claims, **characterised in that** each junction element (80) is a shackle.

5. Floor (4) according to claim 4, **characterised in that** each shackle (80) is oriented generally along a vertical direction (Z) of the aircraft.

6. Floor (4) according to any one of the previous claims, **characterised in that** it is an aircraft cockpit floor, said sealed bottom (68) concerned being located in the forward part of said cockpit.

7. Floor (4) according to claim 6, **characterised in that** it comprises a plurality of secondary spars (48, 49) running along the direction (X) and being fixed to the forward part of the primary structure (12) of the floor (4) formed from the assembly of spars (14) and cross-beams (16), and **in that** a fastener (66) in the attachment means (64) is fixed to the forward part of each of said secondary spars (48, 49).

8. Floor (4) according to any one of the previous claims, **characterised in that** said spars (14) and said cross-beams (16) are made from a composite material.

9. Floor (4) according to claim 8, **characterised in that** said spars (14) and said cross-beams (16) are made from a thermoplastic composite material.

10. Floor (4) according to claim 9, **characterised in that** the thermoplastic composite material is made using carbon fibre plies impregnated with PEEK, PEKK or PPS resin.

11. Assembly for an aircraft, comprising a sealed bottom and a floor according to any one of the previous claims.

12. Assembly according to claim 11, **characterised in that** said sealed bottom is a sealed bottom located in the forward part of the aircraft fuselage.

13. Assembly according to claim 11, **characterised in that** said sealed bottom is a sealed bottom located in the aft part of the aircraft fuselage.

## Patentansprüche

1. Deck (4) für ein Luftfahrzeug, wobei das Deck mehrere Längsträger (14) aufweist, die sich in einer Longitudinalrichtung (X) des Luftfahrzeugs erstrecken, sowie mehrere Querträger (16), die an die Längsträger (14) montiert sind und sich in einer Querrichtung (Y) des Luftfahrzeugs erstrecken, wobei das Deck(4) auch Befestigungsmittel (64) umfasst, die dessen Montage an einem dichten Boden (68) des Luftfahrzeugs ermöglichen,
**dadurch gekennzeichnet, dass** die Befestigungsmittel(64) mehrere Befestigungselemente (66) aufweisen, die jeweils mindestens ein Verbindungsorgan (80) umfassen, das zwei gegenüberliegende Enden (80a,80b) hat, wobei jedes der beiden gegenüberliegenden Enden (80a,80b) entlang einer Achse (82,86), die parallel zu der Querrichtung (Y) ausgerichtet ist, derart gelenkig verbunden ist, dass das Befestigungselement (66) lediglich Kräfte aufnimmt, die in einer Vertikalrichtung (Z) des Luftfahrzeugs ausgeübt werden.

2. Deck (4) nach Anspruch 1, **dadurch gekennzeichnet, dass** jedes Befestigungselement (66) der Befestigungsmittel (64) ein erstes Verbindungselement (76) aufweist, das mit einer Primärstruktur (12) des Decks (4), die durch Zusammenbau der Längsträger (14) und Querträger (16) gebildet wird, einstückig bzw. fest verbunden ist, sowie ein zweites Verbindungselement (78), das an dem dichten Boden (68) einstückig mit diesem zu befestigen ist, und dass jedes Verbindungsorgan (80) mit einem seiner beiden gegenüberliegenden Enden (80b) mit dem ersten Verbindungselement (76), und am anderen der beiden gegenüberliegenden Enden (80a) mit dem zweiten Verbindungselement (78) gelenkig verbunden ist.

3. Deck (4) nach Anspruch 1 oder Anspruch 2, **dadurch gekennzeichnet, dass** jedes Befestigungselement (66) der Befestigungsmittel (64) zwei Verbindungsorgane (80) umfasst.

4. Deck (4) nach einem der vorangehenden Ansprüche, **dadurch gekennzeichnet, dass** jedes Verbindungsorgan (80) ein Schäkel ist.

5. Deck (4) nach Anspruch 4, **dadurch gekennzeichnet, dass** jeder Schäkel (80) hauptsächlich in einer Vertikalrichtung (Z) des Luftfahrzeugs ausgerichtet ist.

6. Deck (4) nach einem der vorangehenden Ansprüche, **dadurch gekennzeichnet, dass** es sich um ein Cockpit-Deck für ein Luftfahrzeug handelt, wobei der betreffende dichte Boden (68) sich an der Vorderseite des Cockpits befindet.

7. Deck (4) nach Anspruch 6, **dadurch gekennzeichnet, dass** es mehrere Sekundär-Längsträger (48,49) aufweist, die sich in einer Richtung (X) erstrecken und fest bzw. einstückig an der Vorderseite einer Primärstruktur (12) des Decks (4) angebracht sind, welche durch Zusammenbau der Längsträger (14) und der Querträger (16) gebildet wird, und dass ein Befestigungselement (66) der Befestigungsmittel (64) fest an der Vorderseite jeder der Sekundär-Längsträger (48,49) angebracht ist.

8. Deck (4) nach einem der vorangehenden Ansprüche, **dadurch gekennzeichnet, dass** die Längsträger (14) und die Querträger (16) aus Verbundmaterial hergestellt sind.

9. Deck (4) nach Anspruch 8, **dadurch gekennzeichnet, dass** die Längsträger (14) und die Querträger (16) aus einem thermoplastischen Verbundmaterial hergestellt sind.

10. Deck (4) nach Anspruch 9, **dadurch gekennzeichnet, dass** das thermoplastische Verbundmaterial mit Hilfe von mit PEEK-, PEKK- oder PPS-Harz durchtränkten Kohlenstofffaser-Fältelungen hergestellt ist.

11. Einheit für ein Luftfahrzeug mit einem dichten Boden sowie einem Deck gemäß einem der vorangehenden Ansprüche.

12. Einheit nach Anspruch 11, **dadurch gekennzeichnet, dass** der dichte Boden ein dichter Boden ist, der sich vor dem Rumpf des Luftfahrzeugs befindet.

13. Einheit nach Anspruch 11, **dadurch gekennzeichnet, dass** der dichte Boden ein sich hinter dem Rumpf des Luftfahrzeugs befindlicher dichter Boden ist.
